(19)

**Europäisches Patentamt**
**European Patent Office**
**Office européen des brevets**

(11) **EP 3 558 520 B1**

(12) **EUROPEAN PATENT SPECIFICATION**

(45) Date of publication and mention of the grant of the patent:
**09.03.2022 Bulletin 2022/10**

(21) Application number: **18706586.7**

(22) Date of filing: **18.01.2018**

(51) International Patent Classification (IPC):
*B01J 37/02* (2006.01)    *B01J 37/18* (2006.01)
*B01J 23/83* (2006.01)    *B01J 23/89* (2006.01)
*B01J 35/04* (2006.01)    *B01J 37/00* (2006.01)
*C01B 3/26* (2006.01)    *C01B 3/40* (2006.01)
*B01J 23/00* (2006.01)

(52) Cooperative Patent Classification (CPC):
(C-Sets available)
**B01J 23/002; B01J 23/83; B01J 23/894;**
**B01J 35/04; B01J 37/0018; B01J 37/0036;**
**B01J 37/0217; B01J 37/0219; B01J 37/0244;**
**B01J 37/18; C01B 3/40;** B01J 2523/00;
C01B 2203/0227; C01B 2203/066;
C01B 2203/1058;                        (Cont.)

(86) International application number:
**PCT/US2018/014143**

(87) International publication number:
**WO 2018/136587 (26.07.2018 Gazette 2018/30)**

(54) **PROCESS FOR PRE-REFORMING A HYDROCARBON FUEL USING A STRUCTURED CATALYST**

VERFAHREN ZUR VORREFORMIERUNG EINES KOHLENWASSERSTOFFHALTIGEN KRAFTSTOFFES IN GEGENWART EINES STRUKTURIERTEN KATALYSATORS

PROCÉDÉ DE PRÉ-REFORMAGE D'UN CARBURANT HYDROCARBONÉ AU MOYEN D'UN CATALYSEUR STRUCTURÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2017 US 201715408892**

(43) Date of publication of application:
**30.10.2019 Bulletin 2019/44**

(73) Proprietors:
• **Saudi Arabian Oil Company**
  **Dhahran 31311 (SA)**
• **Korea Advanced Institute of Science and Technology**
  **Daejeon 34141 (KR)**

(72) Inventors:
• **KATIKANENI, Sai, P.**
  **31311 Dhahran (SA)**
• **BAE, Joongmyeon**
  **Daejeon (KR)**
• **LEE, Sangha**
  **Daejeon 34141 (KR)**
• **BAE, Minseok**
  **Daejeon (KR)**

(74) Representative: **Dauncey, Mark Peter**
  **Marks & Clerk LLP**
  **1 New York Street**
  **Manchester M1 4HD (GB)**

(56) References cited:
EP-A1- 2 031 675        EP-A1- 2 031 675
WO-A1-2014/190148        US-A1- 2005 170 234
US-A1- 2012 024 757        US-A1- 2012 024 757
US-A1- 2014 170 523        US-A1- 2017 312 737

**(Cont. next page)**

- **CHUNCHUAN XU ET AL: "An H2S-Tolerant Ni-GDC Anode with a GDC Barrier Layer", JOURNAL OF THE ELECTROCHEMICAL SOCIETY, vol. 158, no. 11, 1 January 2011 (2011-01-01), page B1405, XP055461894, ISSN: 0013-4651, DOI: 10.1149/2.067111jes**
- **CHUNCHUAN XU ET AL: "An H2S-Tolerant Ni-GDC Anode with a GDC Barrier Layer", JOURNAL OF THE ELECTROCHEMICAL SOCIETY, vol. 158, no. 11, 1 January 2011 (2011-01-01), page B1405, XP055461894, US ISSN: 0013-4651, DOI: 10.1149/2.067111jes**
- **V. SADYKOV ET AL: "Design of asymmetric multilayer membranes based on mixed ionic-electronic conducting composites supported on Ni-Al foam substrate", CATALYSIS TODAY, vol. 156, no. 3-4, 31 October 2010 (2010-10-31), pages 173-180, XP055067803, ISSN: 0920-5861, DOI: 10.1016/j.cattod.2010.07.030**

(52) Cooperative Patent Classification (CPC): (Cont.)
C01B 2203/1064; C01B 2203/1247; H01M 8/0618; H01M 2008/1293; Y02E 60/50; Y02P 20/52

C-Sets
B01J 2523/00, B01J 2523/3712, B01J 2523/375, B01J 2523/821, B01J 2523/847

**Description**

**Technical Field**

The present invention relates to a process for pre-reforming of a hydrocarbons fuel using structured catalysts

Background

Catalysts for chemical reactions generally include homogeneous solution catalysts and heterogeneous solid catalyst. Heterogeneous solid catalysts may include loose particle type catalysts and structured type catalysts, where the structured catalysts are characterized by having some type of formed or rigid structure having flow channels or pathways for reactants to travel through the structure. Structured catalysts can include monolithic catalysts, membrane catalysts, and arranged catalysts. Monolithic catalysts are referred to as honeycomb catalysts and generally are in the form of a continuous unitary structure having small passages for flow of reactants through the structure while interacting with a catalytic material in the structure to catalyze selected chemical reactions. Arranged catalysts generally include particulate catalysts arranged in arrays and further include structural catalysts, where a structure may include corrugated sheets superimposed and stacked to form a catalyst bed.

US 2012/0024757A1 discloses a method for forming a catalyst having catalytic nickel nanoparticles embedded in an activated carbon support. In the examples, a Pd-activated carbon support is prepared, on which Ni nanoparticles are deposited; cerium and gadolinium are subsequently introduced by the self-combustion method, and the powder is eventually calcined. Said catalyst is used in the auto-thermal reforming of a hydrocarbon such as diesel or kerosene. According to said document, embedding catalytic nanoparticles in the catalyst support has the effect of improving resistance to carbon deposition and sulfur poisoning during auto-thermal reforming of diesel fuels.

Structured catalysts provide certain advantages over unstructured particulate catalyst, including providing better control of pressure drop, controlling diffusion length or pathway, preventing flow bypass of reactants, and controlling hot spot formation and thermal runaway problems. Accordingly, there may be certain catalyst systems using unstructured particulate catalysts that can be improved by developing a structured catalyst system for catalyzing similar types of chemical reactions. A replacement structured catalyst can provide certain cost and performance advantages over an unstructured catalyst.

Structured catalysts generally include some type of structural support with a catalyst associated to surfaces of the support. Various methods may be used for application of a catalyst material to a support. The application process and catalyst materials may have an impact on the performance of a structured catalyst, including how long the structured catalyst performs adequately in a selected implementation. Generally, as the materials and processes for creating a structured catalyst are a significant cost, increasing lifetime of a structured catalyst can provide certain cost benefits, as well as certain performance benefits over the lifetime of the catalyst.

An implementation of structured catalysts includes use in a pre-reforming catalyst bed in a solid oxide fuel cell (SOFC). As the reactants in a SOFC include hydrogen, carbon monoxide, methane, and ethane, a pre-reforming catalyst bed allows the use of heavier hydrocarbons to be fed to a pre-reforming catalyst bed for conversion to a gas stream containing lighter hydrocarbons for powering the SOFC. The heavier hydrocarbons generally include those with more than four carbon atoms and may include gasoline, jet fuel, biofuels, and diesel. However, using heavier fuels may be problematic as coking may occur on the anode of the SOFC. Accordingly, if heavier hydrocarbons are to be used as a feed source to a SOFC, there is a need for a relatively high conversion to light hydrocarbons via pre-reforming to minimize coking on the anode of a SOFC.

**Summary**

In a process for pre-reforming a hydrocarbon fuel, structured catalysts are provided to address some of the shortcomings of the art, such as the need for increased conversion of hydrocarbons, decreased consumption of amount of catalysts for similar or higher reaction efficiency, and extended operational life. Thus, the present invention is directed to a process for pre-reforming a hydrocarbon fuel, comprising: feeding to a catalytic pre-reformer air, steam, and a hydrocarbon fuel including C2 and greater hydrocarbons, wherein the hydrocarbon fuel is selected from the group consisting of natural gas, propane, gasoline, jet fuel, biofuel, diesel, and kerosene; and pre-reforming, in the catalytic pre-reformer, the hydrocarbon fuel to produce a reformate exit stream including hydrogen and methane, wherein the catalytic pre-reformer includes a structured catalyst having a structured catalyst substrate, wherein the structured catalyst substrate is a monolithic structured catalyst substrate, a first coating containing cerium gadolinium oxide, the first coating being a pre-coating layer and being applied to a surface of the structured catalyst substrate; and a second coating containing nickel and cerium-gadolinium oxide, the second coating being an active catalyst layer and being applied to the first coating.

The second coating can further contain ruthenium. The second coating can further contain nickel-ruthenium based catalysts. The structured catalyst substrate can be a monolithic structured catalyst substrate. The structured catalyst can contain two or more layers of the first coating. The structured catalyst can contain at least five layers of the first coating. The structured catalyst can contain two or more layers of the second coating. The structured catalyst can contain at least five layers of the second coating.

Disclosed herein are also processes for producing the structured catalysts used in the pre-reforming process of the invention. An exemplary process includes applying a first coating to a surface of the structured catalyst substrate using a first coating solution containing a cerium-gadolinium oxide powder and a first binder to form a first coated structured catalyst substrate; calcining the first coated structured catalyst substrate to form a first calcined structured catalyst substrate; applying a second coating to surfaces of the first calcined structured catalyst substrate using a second coating solution containing a second binder and nickel and cerium-gadolinium oxide to form a second coated structured catalyst substrate; calcining the second coated structured catalyst substrate to form a second calcined structured catalyst substrate; and activating the second calcined structured catalyst substrate by heating in the presence of hydrogen to form a structured catalyst. In certain embodiments, the step of activating can further include heating the second calcined structured catalyst substrate at a temperature of 500 °C for at least four hours in an atmosphere of 30% hydrogen and 70% nitrogen.

The structured catalyst substrate is a monolithic structured catalyst substrate. The preparation process can include applying two or more layers of the first coating. The preparation process can include applying two or more layers of the second coating. The first binder and the second binder can contain the same polymeric materials or be made of different polymeric materials. In certain embodiments, the first binder and the second binder contain polyvinyl butyral resin.

The preparation process can include cleaning surfaces of the structured catalyst substrate before applying the first coating. The process can further include washing the structured catalyst substrate with a 30% nitric acid solution; and drying the structured catalyst substrate at 120 °C for at least one hour. The step of applying the first coating to a surface of the structured catalyst substrate can further include contacting the structured catalyst substrate with the first coating solution; removing excess amounts of the first coating solution to provide a film of the first coating solution on the structured catalyst substrate; and drying the film on the structured catalysts substrate. The steps of contacting, removing, and drying can be sequentially repeated at least five times to form the first coating on the structured catalyst substrate. The first coating solution may further contain a solvent, a dispersant, and a plasticizer.

The step of applying the second coating to a surface of the first calcined structured catalyst substrate can further include contacting the first coated structured catalyst substrate with the second coating solution; removing excess amounts of the second coating solution to provide a film of the second coating solution on the first coated structured catalyst substrate; and drying the film on the first coated structured catalysts substrate. The steps of contacting, removing, and drying can be sequentially repeated at least five times to form the second coating on the first coated structured catalyst substrate. The second coating solution can further contain a solvent, a dispersant, and a plasticizer.

The present invention concerns a process for pre-reforming a hydrocarbon fuel using structured catalysts. The process for pre-reforming a hydrocarbon fuel includes the steps of: feeding to a catalytic pre-reformer air, steam, and a hydrocarbon fuel including C2 and greater hydrocarbons; and pre-reforming, in the catalytic pre-reformer, the hydrocarbon fuel to produce a reformate exit stream including hydrogen and methane. The catalytic pre-reformer includes a structured catalyst having a structured catalyst substrate, wherein the structured catalyst substrate is a monolithic structured catalyst substrate, a first coating containing cerium gadolinium oxide, the first coating being a pre-coating layer and being applied to a surface of the structured catalyst substrate; and a second coating containing nickel and cerium-gadolinium oxide, the second coating being an active catalyst layer and being applied to the first coating. The hydrocarbon fuel is selected from the group consisting of natural gas, propane, gasoline, jet fuel, biofuel, diesel, and kerosene.

Disclosed herein are solid oxide fuel cell devices in flow communication with pre-reformers (not according to the invention) . Exemplary pre-reformers used here include pre-reformers containing a structured catalyst to pre-reform a hydrocarbon fuel source into a gas stream containing hydrogen and methane. The structured catalyst containing a structured catalyst substrate, a first coating containing cerium-gadolinium oxide; and a second coating containing nickel and cerium-gadolinium oxide. The solid oxide fuel cell in flow communication with the structured catalyst pre-reformer to receive the gas stream containing hydrogen and methane.

## Brief Description of the Drawings

The invention will be readily understood by the following detailed description in conjunction with the accompanying drawings. To facilitate this description, like reference numerals designate like structural elements or procedures in a method. The invention is illustrated by way of example and not by way of limitation in the figures of the accompanying drawings.

**FIGS. 1A** and **1B** are scanning electron microscope (SEM) images of a structured catalyst.

**FIG. 2** is a schematic illustration of a process for producing a structured catalyst.

**FIG. 3** is a schematic illustration of a process for pre-reforming a hydrocarbon according to the invention.

**FIG. 4** is a schematic illustration of a solid oxide fuel cell device with a pre-reformer including a structured catalyst, not according to the invention.

**FIG. 5** is a schematic illustration of an experimental system for catalytic activity testing of pre-reforming catalysts.

**FIG. 6** is a graphical representation of a conversion of n-dodecane as a function of time for structured catalysts with and without the CGO pre-coating layer for a Ni-Ru/CGO catalyst.

**FIGS. 7A** and **7B** are scanning electron microscopy (SEM) images of spent structured catalysts without and with a CGO pre-coating.

**FIGS. 8A, 8B,** and **8C** are SEM images of three structured catalysts with five, seven, and nine layers of Ni-Ru/CGO coating respectively.

**FIGS. 9A, 9B, 9C,** and **9D** are scanning electron microscope images of structured substrates with CGO pre-coating followed by heat treatment at 800 °C, 900 °C, 1000 °C, and 1100 °C, respectively.

**FIG. 10** is a graphical representation of a comparison of a granular catalyst and a structured catalyst in a pre-reforming device. The fuel used for the comparison was n-dodecane.

## Detailed Description

The present invention relates to a process for pre-reforming of heavier hydrocarbons to produce lighter hydrocarbons. In embodiments not according to the invention, the process may be implemented in fuel cell applications. Further embodiments may be described and disclosed.

In the following description, numerous details are set forth in order to provide a thorough understanding of the various embodiments. In other instances, well-known processes, devices, and systems may not been described in particular detail in order not to unnecessarily obscure the various embodiments. Additionally, illustrations of the various embodiments may omit certain features or details in order to not obscure the various embodiments.

In the following detailed description, reference is made to the accompanying drawings that form a part of this disclosure. Like numerals may designate like parts throughout the drawings. The drawings may provide an illustration of some of the various embodiments in which the subject matter of the present disclosure may be practiced. Other embodiments may be utilized, and changes may be made without departing from the scope of the present invention, which is defined in the appended claims.

The description may use the phrases "in some embodiments," "in various embodiments," "in an embodiment," or "in embodiments," which may each refer to one or more of the same or different embodiments. Furthermore, the terms "comprising," "including," "having," and the like, as used with respect to embodiments of the present disclosure, are synonymous.

Disclosed and described here are structured catalysts for pre-reforming of hydrocarbons such as diesel, including embodiments of structured catalysts, methods of making the structured catalysts, and methods of using the structured catalysts. Embodiments not according to the invention may be useful for fuel cell applications, such as in a solid oxide fuel cell application, where diesel fuel is subjected to pre-reforming using embodiments of the structured catalysts. Generally, diesel fuel is an attractive hydrocarbon fuel for fuel cell applications because of a relatively high energy density, well-constructed infrastructure for fueling options, and relatively high safety characteristics of diesel as a fuel. Diesel fuel is comprised of mostly C12 to C24 hydrocarbons. In a fuels cell application, generally diesel is converted into a synthetic-gas (syngas), which is fed to a fuel cell. In pre-reforming, heavy hydrocarbons, including diesel, are converted into methane containing syngas.

In comparison to various reforming methods, pre-reforming using the structured catalysts according to the invention may be more effective for stack cooling in a SOFC. For example, without being bound by theory, irreversible heat is generated by electrochemical reactions in a SOFC. Unless the heat is removed, the temperature of upper cells increases. This increase in temperature may lead to failure of the SOFC cell, the sealant, and the interconnect materials. Pre-reforming to produce methane containing syngas is a way to remove the irreversible heat by feeding the syngas to the SOFC. A SOFC directly uses the syngas by internal reforming on the anode. This internal reforming absorbs the irreversible heat, because internal reforming is endothermic. Therefore, a temperature increase in a SOFC may be minimized by feeding syngas produced by pre-reforming.

In comparison to other catalysts for pre-reforming, structured catalysts used in the pre-reforming process of the invention can be more effective for minimizing coke formation, and thus, more effective by having a higher tolerance to coke formation. Generally, high tolerance to coke formation and high activity under 500 °C are desirable for a diesel pre-reforming catalyst. Coke formation tends to deactivate a catalyst, so minimizing coke formation is desirable. Temperatures below about 500 °C tend to reduce coke formation. Additionally, having a catalyst with better tolerance to coke formation is desirable as activity is not reduced as much when coke is formed, thereby extending catalyst activity over a longer period of time. Accordingly, high activity at lower temperatures is desirable for a pre-reforming catalyst as coke formation is reduced and thus activity is impacted less, while catalytic activity is maintain at the lower temperatures by virtue of the catalyst properties and reduced coke formation.

The structured catalysts used in the pre-reforming process of the invention generally provide improved heat transfer in comparison to granulated catalysts. This improved heat transfer may be important for practical applications of hydrocarbon pre-reforming as the reaction is endothermic and thus heat is supplied from an external source to the catalyst. To effectively provide such heat, the higher heat transfer properties of the structured catalyst may be necessary for effective pre-reforming, in comparison to a granulated catalyst. An additional benefit of the structured catalysts used in the process of the invention is to accommodate an improved SOFC design via making the design simpler and compact, owing to the improved properties of structured catalysts. Moreover, as catalysts account for a large portion of a pre-reformer's cost, a cost reduction may be achieved using a structured catalyst in comparison to a granulated catalyst. The structured catalysts disclosed and described here may have better stability over time in comparison to other catalysts for pre-reforming. For example, the structured catalysts disclosed and described here can be manufactured using novel coatings and processes to increase catalyst stability and longevity while having less sensitivity to coke formation and operating below 500 °C to minimize coke formation. In various embodiments, a first coating or pre-coating layer may be used to enhance adhesion of an active catalyst coating to a structured substrate.

The structured catalysts used in the pre-reforming process of the invention contain a structured catalyst substrate and coatings containing cerium-gadolinium oxide. The structured catalyst contains a structured catalyst substrate, a first coating containing cerium-gadolinium oxide and applied to a surface of the structured catalyst substrate; and a second coating containing nickel and cerium-gadolinium oxide and applied to the first coating. The second coating can further contain ruthenium. The second coating can further contain nickel-ruthenium based catalysts. The catalyst coating includes a nickel component, a cerium oxide component, and gadolinium oxide component. In certain embodiments, the catalyst coating can include a nickel component, a ruthenium component, a cerium oxide component, and gadolinium oxide component. The structured catalyst can contain two or more layers of the first coating. The structured catalyst can contain at least five layers of the first coating. The structured catalyst can contain two or more layers of the second coating. The structured catalyst can contain at least five layers of the second coating.

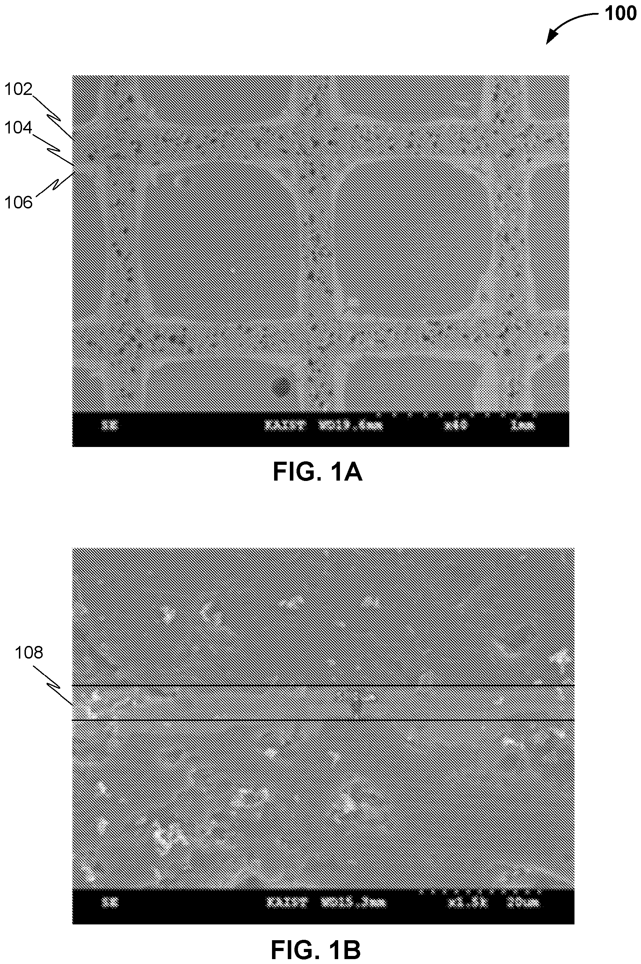

FIGS. 1A and 1B are scanning electron microscope images of a structured catalyst 100, used in the pre-reforming process of the present invention. The structured catalyst 100 contains a structured catalyst substrate 102 and a first coating 104 that includes cerium-gadolinium oxide (CGO) and is applied to a surface of the structured catalyst substrate 102. A first binder is used as part of the coating solution. The structured catalyst 100 also contains a second coating 106 that includes nickel CGO and is applied to the first coating 104. A second binder is used as part of the coating solution. Usually the binder is present when the catalyst is prepared, but after calcination process, the binder is be oxidized completely. Therefore, final catalyst does not contain the binder. In certain embodiments, the first coating 104 and second coating 106 may have a combined thickness 108 of approximately 5 micrometers. In certain embodiments, the first coating 104 and second coating 106 may have a combined thickness 108 of about less than 10 µm. The structured catalyst substrate 102 is a monolithic structured catalyst substrate. In certain embodiments, the structured catalyst substrate 102 can be a porous geometric monolithic structured catalyst substrate, such as a cubic structure, as seen in FIG. 1A, or a hexagonal structure or any suitable geometric structure. In other embodiments, the structured catalyst substrate 102 can be a random porous monolithic structure. In certain embodiments, the structured catalyst substrate 102 can be made of ceramic, or metal, or combinations of metal and ceramic. The first binder may be comprised of a first polymeric material and the second binder is comprised of a second polymeric material. The first and second polymeric materials may be comprised of a polyvinyl butyral resin. By way of example, the polyvinyl butyral resin may be Butvar® type of resin such as Butvar-98. Any type of binder capable of binding a CGO powder to a surface may be used to bind the first coating to the structured catalyst substrate 102. Any type of binder capable of binding a nickel CGO powder to a CGO surface may be used to bind the second coating to the first coating.

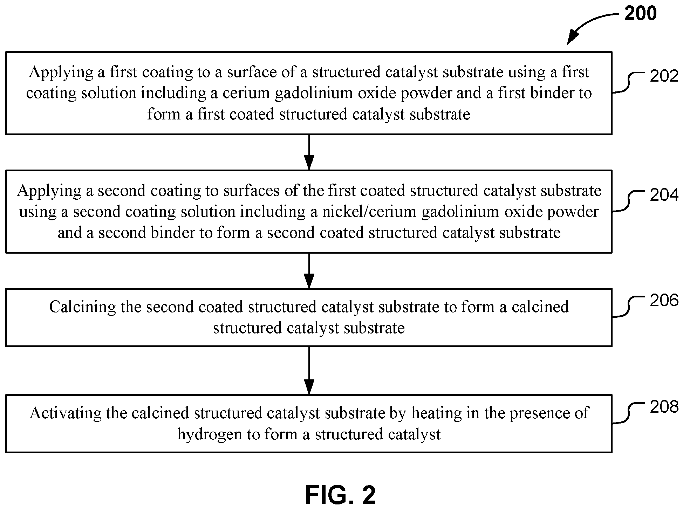

FIG. 2 is a schematic illustration of a process 200 for producing a structured catalyst used in the pre-reforming process of the present invention. At step 202 of the process 200, the process 200 includes application of a first coating to a surface of the structured catalyst substrate using a first coating solution including a cerium-gadolinium oxide powder and a first binder to form a first coated structured catalyst substrate. The structured catalyst substrate is a monolithic structured catalyst substrate. In some embodiments, the structured catalyst substrate may be a porous geometric monolithic structured catalyst substrate, such as a cubic structure, as seen in FIG. 1A, or a hexagonal structure or any suitable geometric structure. In other embodiments, the structured catalyst substrate can include a random porous monolithic structure. In various embodiments, the structured catalyst substrate may be comprised of ceramic or metal or a combination thereof. The first binder may be comprised of a first polymeric material and the second binder is comprised of a second polymeric material. The first and second polymeric materials may be comprised of a polyvinyl butyral resin. By way of example, the polyvinyl butyral resin may be Butvar® type of resin such as Butvar-98. Any type of binder capable of binding a CGO powder to a surface may be used to bind the first coating to the structured catalyst substrate 102. Any type of binder capable of binding a nickel CGO powder to a CGO surface may be used to bind the second coating to the first coating. The process **200** can further include cleaning surfaces of the structured catalyst substrate before applying the first coating. An acid or other suitable solution may be used to remove impurities from surfaces of the structured catalyst. The cleaning of the surfaces of the structured catalyst substrate further can include washing the structured catalyst substrate with a 30% nitric acid solution and drying the structured catalyst substrate at 120 °C for at least one hour to provide a structured catalyst substrate having cleaned surfaces for receiving the first coating. The structured catalyst substrate can be subject to drying overnight, if required.

At step **202** of the process **200,** application of the first coating can further include contacting the structured catalyst substrate with the first coating solution, removing excess amounts of the first coating solution to provide a film of the first coating solution on the structured catalyst substrate, and drying the film on the structured catalysts substrate. The processes of contacting, removing, and drying may be sequentially repeated at least five times to form the first coating on the structured catalyst substrate. The drying may be at 120 for at least one hour.

At step **202** of the process **200,** the first coating solution may further include a solvent, a dispersant, and a plasticizer. The solvent can be a combination of two or more solvents, such as a mixture of 78% xylene and 22% butanol. The dispersant may be polyvinylpyrrolidone, and the plasticizer may be polyethylene glycol. The solvent may be any suitable solvent for application of the first coating. The dispersant may be any suitable dispersant for stabilizing the first coating solution. The plasticizer may be any suitable plasticizer for the first coating solution. The weight ratio of the various components in the first coating solution to the weight of the structured catalyst may be 4.0 for the CGO powder, 16.0 for the solvent, 0.2 for the dispersant, 0.2 for the plasticizer, and 0.16 for the binder.

At step **204** of the process **200,** the process **200** can include application of a second coating to surfaces of the first coated structured catalyst substrate using a second coating solution including a nickel CGO powder and a second binder to form a second coated structured catalyst substrate. The first coating may enhance adhesion of the second coating. In other words, without the first coating, the second coating directly coating on the structured catalyst substrate may not have sufficient adhesion to surfaces of the structured catalyst substrate for practical use in a pre-reforming process. This second coating may delaminate and wash out without the first coating to provide adequate adhesion. The CGO coating may be referred to as a pre-coating layer. The pre-coating layer can prevent undesirable side reactions in a pre-reformer including the structured catalyst.

At step **204** of the process **200,** application of the second coating can further include contacting the first coated structured catalyst substrate with the second coating solution, removing excess amounts of the second coating solution to provide a film of the second coating solution on the first coated structured catalyst substrate, and drying the film on the first coated structured catalyst substrate. The processes of contacting, removing, and drying may be sequentially repeated at least five times to form the second coating on the first coated structured catalyst substrate. The drying may be at 120 °C for at least one hour.

At step **204** of the process **200,** the second coating solution further may include a solvent, a dispersant, and a plasticizer. The solvent can be a combination of two or more solvents, such as a mixture of 78% xylene and 22% butanol. The dispersant may be polyvinylpyrrolidone, and the plasticizer may be polyethylene glycol. The solvent may be any suitable solvent for application of the second coating. The dispersant may be any suitable dispersant for stabilizing the second coating solution. The plasticizer may be any suitable plasticizer for the second coating solution. The weight ratio of the various components in the second coating solution to the weight of the structured catalyst may be 4.0 for the nickel CGO powder, 16.0 for the solvent, 0.2 for the dispersant, 0.2 for the plasticizer, and 0.16 for the binder.

At step **206** of the process **200,** the process **200** can include calcining the second coated structured catalyst substrate to form a calcined structured catalyst substrate. At step **206** of the process **200,** the calcining may further comprise heating in air at a temperature of 800-1100 °C for at least four hours, wherein the temperature of end temperature is reached by increasing the temperature over a period of six hours.

At step **208** of the process **200,** the process **200** can include activating the calcined structured catalyst substrate by heating in the presence of hydrogen to form a structured catalyst. At step **208** of the process **200,** the activating further may comprise heating at a temperature of 500 °C for at least four hours in an atmosphere of 30% hydrogen and 70% nitrogen. The atmosphere can include a sufficient amount of hydrogen to activate the calcined structured catalyst substrate in combination with an optional gas having no or minimal impact on the activating. The optional gas may be an inert gas such as a noble gas for example. Without being bound by theory, the nickel of the second coating may be in a non-active form nickel oxide before activating. The activating may convert the non-active form into an active form of nickel in the structured catalyst.

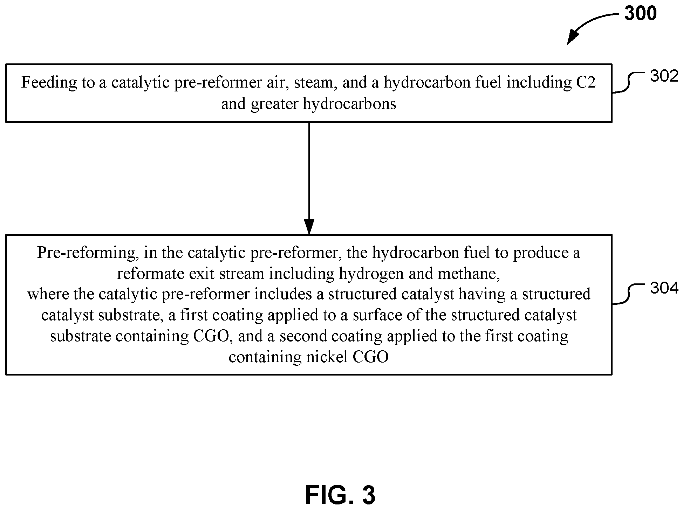

**FIG. 3** is a schematic illustration of a process **300** for pre-reforming a hydrocarbon fuel, in accordance with the present invention. At step **302** of the process **300,** the process **300** can include feeding to a catalytic pre-reformer air, steam, and a hydrocarbon fuel including C2 and greater hydrocarbons selected from the group consisting of natural gas, propane, gasoline, jet fuel, biofuel, diesel, and kerosene. In various embodiments, the hydrocarbon fuel may be a diesel fuel having impurities within reasonable engineering tolerances. In various embodiments not according to the invention, the catalytic pre-reforming may be a component of a SOFC and provides a synthetic gas containing methane to the SOFC.

At step **304** of the process **300,** the process includes pre-reforming, in the catalytic pre-reformer, the hydrocarbon fuel to produce a reformate exit stream including hydrogen and methane, wherein the catalytic pre-reformer includes a structured catalyst having a structured catalyst substrate, a first coating applied to a surface of the structured catalyst substrate containing CGO, and a second coating applied to the first coating containing nickel CGC, in accordance with appended claim 1. In various embodiments, the structured catalyst may include the structured catalyst of **FIG. 1,** including the variously described embodiments disclosed in relation to **FIG. 1.**

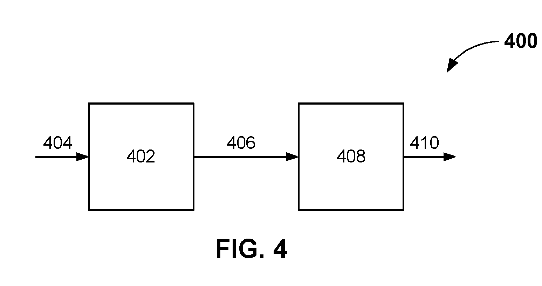

**FIG. 4** is a schematic illustration of a solid oxide fuel cell device **400** with a pre-reformer **402** including a structured catalyst, not according to the present invention. The device **400** may include the structured catalyst pre-reformer **402** to pre-reform a hydrocarbon fuel source **404** into a gas stream **406** including hydrogen and methane. The device **400** further may include a solid oxide fuel cell (SOFC) **408** in flow communication with the structured catalyst pre-reformer **402** to receive the gas stream **406**. The device **400** may include an exhaust stream **410** to remove reactants from the SOFC **408.** The structured catalyst pre-reformer **402** may include a structured catalyst with a structured catalyst substrate, a first coating applied to a surface of the structured catalyst substrate and including CGO, and a second coating applied to the first coating and including nickel CGO. The structured catalyst may include the structured catalyst of **FIG. 1,** including the variously described embodiments disclosed in relation to **FIG. 1.**

## EXAMPLES

Various examples are described to illustrate the invention.

**Example 1** (illustrative)

In Example 1, an experimental device is disclosed and described for testing the pre-reforming catalysts .

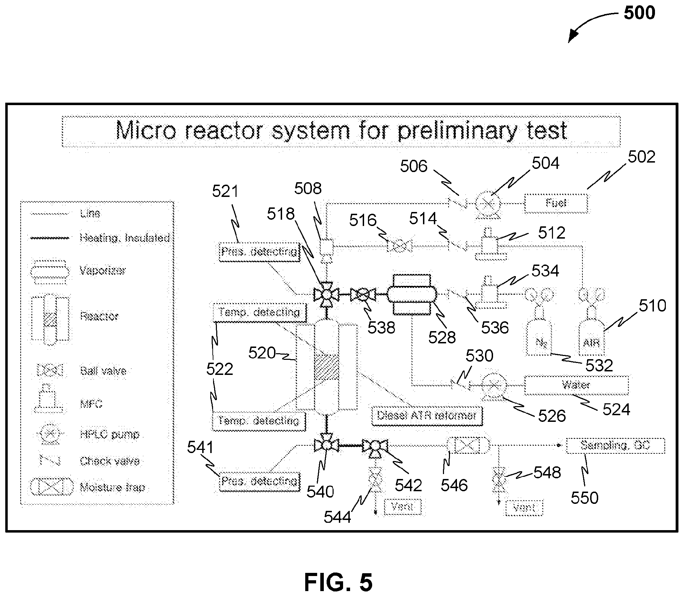

**FIG. 5** is a schematic illustration of an experimental system **500** for catalytic activity testing of pre-reforming catalysts. In the system **500,** fuel from container **502** is pumped by a first high performance liquid chromatography (HPLC) pump **504** through a first check valve **506** and is atomized by an ultrasonic injector **518** by mixing with air from container **510** in mixer **508**. The air from container **510** passes through a first mass flow controller **512,** second check valve **514,** and first ball valve **516**. Atomized fuel with air passes through ultrasonic injector **518** to reactor **520**. The reactor **520** is a pre-reformer and can be a diesel autothermal reformer as shown in **FIG.** 5. Ultrasonic injector **518** includes pressure detecting gauge **521**. Reactor **520** includes temperature detectors **522**.

The reactor **520** is made of 12.7 mm STS (stainless steel) tubes placed inside electric furnaces. The reactor **520** is controlled using PID temperature controllers and are monitored by thermocouples placed at the bottom of the catalytic bed, as indicated by temperature detectors **522**. De-ionized water from container **524** (>15M$\Omega$) is supplied by a second HPLC pump **526**. The first and second HPLC pumps are from MOLEH Co. Ltd. The water from container **524** is passed through a second check valve **530** and is supplied to a steam generator **528**. A small quantity of nitrogen from container **532** is also fed into the steam generator **528** and ultrasonic-injector **518** to obtain a stable delivery of the reactants. The air from container **510** and nitrogen from container **532** are metered using mass flow controllers (MKS Co. Ltd.), as illustrated. The nitrogen from container **532** passes through a second mass flow controller **534,** a third check valve **536,** and then to the steam generator **528** to mix with water from container **534**. The mixture passes through a valve **538** and then to the ultrasonic injector **518**. The effluent from the reactor **520** passes through valve **540** with pressure detecting device **541,** then through valve **542** and a vent via valve **544,** then through a moisture trap **546** and then to a gas chromatograph (GC) **550** for sampling. There is a vent via valve **548** between the moisture trap **546** and the GC **550**. The GC **550** is gas equipped with a Thermal Conductivity Detector (TCD) and a Flame Ionization Detector (FID), which were used to analyze the composition of the effluent, also referred to as the diesel reformate in the case that diesel is the fuel. The system of **FIG. 5** was used for activity testing and analysis of various structured catalysts to design and optimize the structured catalysts. Activity test was used to compare the activity and stability of the structured catalysts. The spent catalysts were analyzed by scanning electron microscope to observe the morphological changes of the structured catalysts.

**Example 2**

In Example 2, various embodiments of structured pre-reforming catalysts for diesel pre-reforming were prepared. Preparation methods included various pretreatments and compositions of the structured catalysts. The structured catalysts were designed to produce methane rich gas from diesel fuel. Various embodiments of the structured catalysts consisted of CGO pre-coating layer and a catalyst layer over the CGO pre-coating layer. For comparison, structured catalysts without a CGO pre-coating layer were prepared. Without being bound by theory, the CGO pre-coating layer enhances adhesion and prevents undesired reactions. The Ni-Ru/CGO catalyst layer was formed over the CGO pre-coating layer.

In this example, a structured catalyst was prepared by washing a structured substrate with a solution of 30 % by weight of nitric acid to remove impurities from surfaces of the structured catalyst substrate. The structured substrate is as illustrated in **FIG. 1A**, prior to application of the coatings. The washed substrate was dried at 120 °C overnight.

A CGO pre-coating slurry (first coating) was prepared by mixing the constituents in the proportions illustrated in Table 1 and then subjected to ball milling for 24 hours before coating the structured substrate. The structured substrate was coated by dipping into the first coating solution. Excess first coating solution was removed by blowing air across the structured substrate. The resulting coated structured substrate was dried at 120 °C for 1 hour. The process of dip coating, removing excess slurry, and drying were repeated for different structured substrates to provide structured substrates with different numbers of coating layers, and thus thicknesses, of the first coating. The various structured substrates were calcined in air at 800 °C for 4 hours. The temperature was ramped to 800 °C by 6 hours.

**TABLE 1.**

| Constituent | Chemical agent | Weight ratio |
|---|---|---|
| Coating powder | CGO (first coating) or Ni-Ru/CGO catalyst (second coating) | 4.0 |
| Solvent | 78% xylene, 22% butanol (by weight) | 16.0 |
| Dispersant | polyvinylpyrrolidone (PVPD) | 0.2 |
| Plasticizer | polyethylene glycol | 0.2 |
| Binder | Butvar B-98 | 0.16 |

The various calcined structured substrates with the CGO coating were then coated with the second coating solution with the Ni-Ru/CGO based catalyst material. The coating process was the same as with the first CGO coating solution to provide a different number of coating layers of the Ni-Ru/CGO material. The resulting substrates were calcined in air at 800 °C for 4 hours. The temperature was ramped to 800 °C by 4 hours.

SEM images of one of the various structured catalysts with two coatings are shown in **FIGS. 1A** and **1B.** The thickness of total coating was less than approximately 10 $\mu$m for the structured catalyst shown in **FIGS. 1A and 1B.** Without being bound by theory, the CGO pre-coating layer (first coating layer) enhances adhesion of the Ni-Ru/CGO coating layer (second coating layer) and prevents undesired chemical reactions during diesel pre-reforming. Structured catalysts with and without the CGO pre-coating layer were tested for conversion percentage of diesel fuel in the pre-reforming device illustrated in **FIG. 5.**

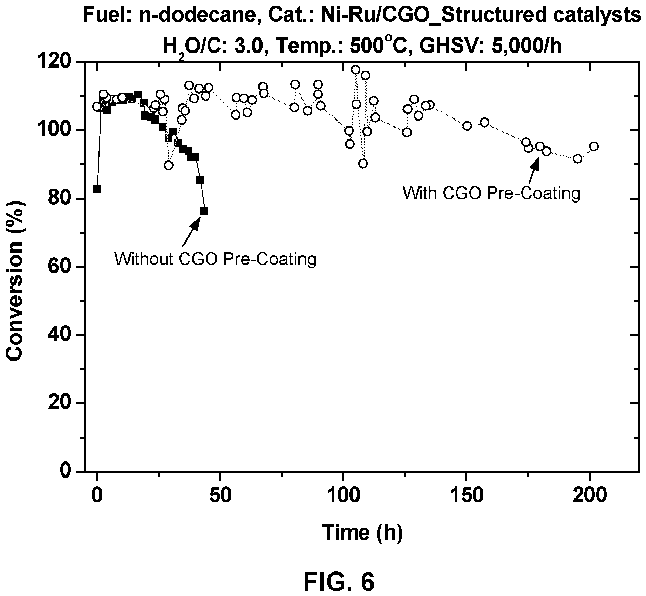

**FIG. 6** is a graphical representation of conversion of n-dodecane as a function of time for structured catalysts with and without the CGO pre-coating layer for a Ni-Ru/CGO catalyst coating, in accordance with various embodiments.

Conversion is calculated as the equation below:

$$\text{Conversion} = (CO + CO2 + CH4 \text{ production in mole basis})/(\text{total carbon in fuel input})$$

However, with errors of fuel delivery pump and gas chromatography measurements, the conversion can be varied. The conversion result can be used as a reference of long-term stability.

The pre-reforming fuel used to simulate diesel fuel was n-dodecane. The water to carbon ratio was approximately three to one on mole basis. The temperature of operation of the pre-reforming was 500 °C. The gas hourly space velocity (GHSV) was 5000 per hour. GSHV is equal to the reactant gas flow rate divided by the reactor volume. As can be seen in FIG. 6, the structured catalyst without the CGO pre-coating was degraded within 50 hours. In stark contrast, the structured catalyst with the CGO pre-coating was successfully operated for 200 hours with high conversion rates and with 15.6 mole percent of CH$_4$ concentration, which indicates much better stability as a result of using the CGO pre-coating.

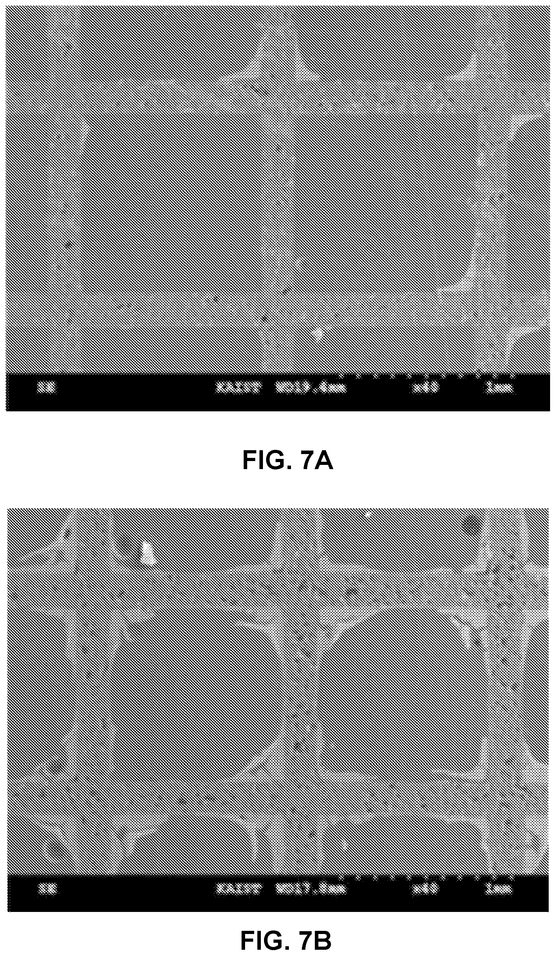

**FIGS.** 7A and **7B** are scanning electron microscopy (SEM) images of spent structured catalysts with and without a CGO pre-coating, in accordance with various embodiments. **FIG. 7A** is the structured catalyst without the CGO pre-coating. As can be seen in **FIG. 7A,** the catalyst coating on the structured substrate is mostly removed, indicating a loss of catalytic activity of the structured catalyst. **FIG. 7B** is the structured catalyst with the CGO pre-coating. As can be seen in **FIG. 7B,** the catalyst coating remains adhered to the structured catalyst, indicating continued activity of the structured catalyst. In comparing **FIGS. 7A** and **7B,** the catalyst layer was washed out without CGO pre-coating. Without being bound by theory, Ni-Ru/CGO-based catalyst expands and contracts repeatedly by redox and nickelcarbon (NiC) formation. This expansion and contraction accelerates the delamination of catalyst layer during pre-reforming process. Unlike the structured catalysts without pre-coating, the Ni-Ru/CGO coating layer remained on substrates after the test, which indicates that the delamination is prevented by the introduction of CGO pre-coating layer to provide stability to the coating. The Ni-Ru/CGO coating by itself is not as stable as when the pre-coating CGO layer is added to the structured catalyst.

## Example 3

In Example 3, various embodiments of the structured catalysts were prepared with different numbers of coating layers of CGO pre-coating and the Ni-Ru/CGO catalyst coating layer. The purpose of varying the coating layer was to optimize the number of layers for the structured catalysts. The purpose of optimizing the number of coating layers was to determine whether there is an optimum number of coating layers to reduce the cost and the time of preparation of various embodiments of the structured catalysts for pre-reforming. The thickness of coating layer was observed using scanning electron microscope (SEM).

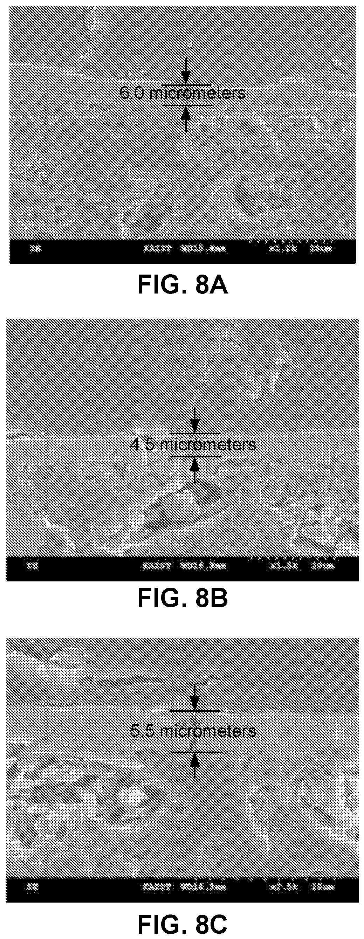

**FIGS. 8A, 8B,** and **8C** schematically illustrate SEM images of three structured catalysts with five, seven, and nine layers of Ni-Ru/CGO coating layer respectively, in accordance with various embodiments. The thickness of the Ni-Ru/CGO coating layer was 6.0, 4.5, and 5.5 micrometers for coating layer numbers five, seven, and nine, respectively, as illustrated in **FIGS. 8A, 8B,** and **8C.** As the thickness of the Ni-Ru/CGO coating did not seem to increase as the number of coating layers increased from five to nine, this result indicates that additional coating layers beyond five may not be advantageous to increase thickness. Without being bound by theory, this result may indicate that additional coating steps may be partially removing the previously existing coating layers. Based on these results, an optimal coating layer number may be approximately five.

## Example 4

In Example 4, heat treatment of the CGO pre-coating layer was conducted at various temperatures to evaluate effect of heat on various embodiments of the structured catalysts. After coating a structured catalyst substrate with a CGO pre-coating layer, the substrate was heat treated before the Ni-Ru/CGO catalyst layer was added on top of the CGO pre-coating. Without being bound by theory, the purpose of the heat treatment is to prevent removal of the CGO pre-coating layer during the addition of the Ni-Ru/CGO catalyst layer on top of the CGO pre-coating layer. The heat treatment temperature was varied to identify temperatures in which a stable CGO layer is formed on the structured substrate.

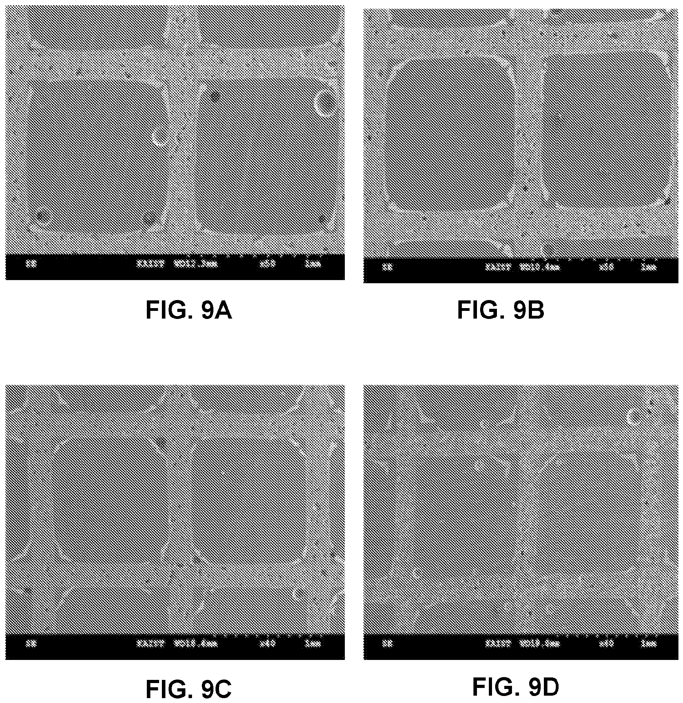

**FIGS. 9A, 9B, 9C,** and **9D** are scanning electron microscope images of structured substrates with CGO pre-coating followed by heat treatment at 800 °C, 900 °C, 1000 °C, and 1100 °C, respectively, in accordance with various embodiments. As can be seen in the images, the CGO pre-coating is substantially adhered to the structured substrate at 800 °C treatment temperature. However, as the temperature is increased, the CGO pre-coating layer becomes more delaminated from the structured substrate. At the highest temperature of 1100 °C, the CGO pre-coating appears to be mostly delaminated from the structured substrate. Accordingly, a heat treatment temperature of approximately 800 °C or less appears to provide a better CGO pre-coating layer for subsequent attachment of a Ni-Ru/CGO catalyst layer.

## Example 5

In Example 5, a comparison is made between an embodiment of the structured (monolith) catalysts and a non-structured (granular or granulated) catalyst in a pre-reforming reaction of n-dodecane fuel using the device of FIG. 1.

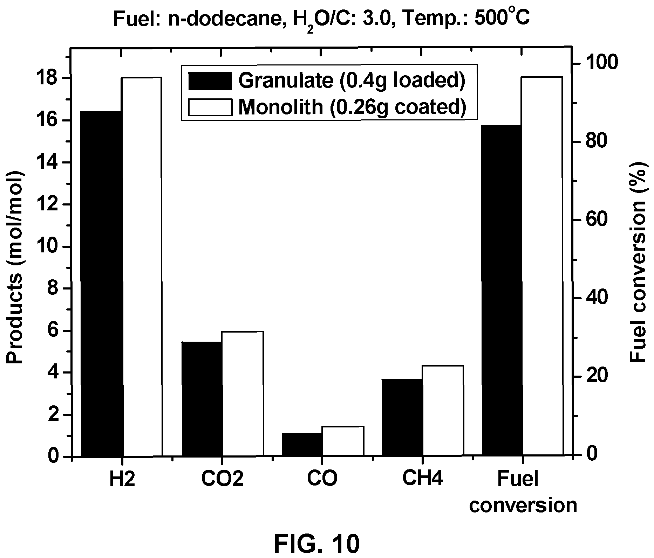

**FIG. 10** is a graphical representation of a comparison of a granular catalyst and a structured catalyst in a pre-reforming device, in accordance with various embodiments. The fuel used for the comparison was n-dodecane. The water to carbon ratio was three to one by mole basis. The temperature of the pre-reforming reaction was 500 °C. The Ni-Ru/CGO catalyst loaded on the granulated catalyst was 0.4 grams, and the Ni-Ru/CGO catalyst loaded on the monolith catalyst was 0.26 grams. The catalysts were loaded in the reactor separately and tested separately for conversion of n-dodecane in the pre-reforming reactor of **FIG. 5.** The results in **FIG. 10** show that a significantly reduced amount of Ni-Ru/CGO catalyst was utilized when using the structured catalysts in comparison to the granulated catalyst. When using the structured monolith catalyst, approximately 97% of n-dodecane was converted to synthetic gas. On the other hand, fuel conversion was less than 90% for the granulated catalyst, approximately 84%. Without being bound by theory, the superiority of the structured catalyst likely is due to a higher mass transfer coefficient in comparison to the granulated catalyst. Based on the experimental results, consumption of the Ni-Ru/CGO catalyst amount may be reduced by approximately at least 35% when using the structured catalyst instead of the granulated catalyst.

Ranges may be expressed in this disclosure as from about one particular value, and/or to about another particular value. When such a range is expressed, it is to be understood that another embodiment is from the one particular value and/or to the other particular value, along with all combinations within said range.

It will be understood that certain of the above-described structures, functions, and operations of the above-described embodiments are not necessary to practice the present invention and are included in the description simply for completeness of an exemplary embodiment or embodiments. It is therefore to be understood that various changes, substitutions, and alterations can be made hereupon without departing from the principle and scope of the invention, which is defined by the appended claims. There various elements described can be used in combination with all other elements described herein unless otherwise indicated.

## Claims

1.   A process for pre-reforming a hydrocarbon fuel, comprising:

feeding to a catalytic pre-reformer air, steam, and a hydrocarbon fuel including C2 and greater hydrocarbons, wherein the hydrocarbon fuel is selected from the group consisting of natural gas, propane, gasoline, jet fuel, biofuel, diesel, and kerosene; and
pre-reforming, in the catalytic pre-reformer, the hydrocarbon fuel to produce a reformate exit stream including hydrogen and methane,

wherein the catalytic pre-reformer includes a structured catalyst having a structured catalyst substrate, wherein the structured catalyst substrate is a monolithic structured catalyst substrate, a first coating containing cerium-gadolinium oxide, the first coating being a pre-coating layer and being applied to a surface of the structured catalyst substrate; and a second coating containing nickel and cerium-gadolinium oxide, the second coating being an active catalyst layer and being applied to the first coating.

2.   A process according to claim 1, wherein the second coating of the structured catalyst further contains ruthenium.

3.   A process according to claim 1 or claim 2, wherein the structured catalyst contains two or more layers of the second coating.

## Patentansprüche

1.   Verfahren zur Vorreformierung eines Kohlenwasserstoffbrennstoffs, Folgendes umfassend:

Einspeisen von Luft, Dampf und einem Kohlenwasserstoffbrennstoff, einschließend C2 und größere Kohlenwasserstoffe in einen katalytischen Vorreformer, wobei der Kohlenwasserstoffbrennstoff aus der Gruppe ausgewählt ist, bestehend aus Erdgas, Propan, Benzin, Flugbenzin, Biokraftstoff, Diesel und Kerosin; und
Vorreformieren, in dem katalytischen Vorreformer, des Kohlenwasserstoffbrennstoffs zum Erzeugen eines Reformat-Ausgangsstroms, welcher Wasserstoff und Methan einschließt,
wobei der katalytische Vorreformer einen strukturierten Katalysator einschließt, welcher ein Substrat für einen strukturierten Katalysator aufweist,
wobei das Substrat für einen strukturierten Katalysator ein monolithisch strukturiertes Katalysatorsubstrat ist, wobei eine erste Beschichtung Cerium-Gadoliniumoxid enthält, wobei die erste Beschichtung eine Vorbeschichtung ist und an einer Oberfläche des strukturierten Katalysatorsubstrates aufgebracht ist; und wobei eine zweite Beschichtung Nickel und Cerium-Gadoliniumoxid enthält, wobei die zweite Beschichtung eine aktive Katalysatorschicht ist und auf der ersten Beschichtung aufgebracht ist.

2.   Verfahren nach Anspruch 1, wobei die zweite Beschichtung des strukturierten Katalysators ferner Ruthenium enthält.

3.   Verfahren nach Anspruch 1 oder 2, wobei der strukturierte Katalysator zwei oder mehr Schichten der zweiten Beschichtung enthält.

**Revendications**

1.  Procédé pour le préreformage d'un combustible hydrocarboné, comprenant :

    l'alimentation, sur un préreformeur catalytique, d'air, de vapeur et d'un combustible hydrocarboné qui inclut des hydrocarbures en C2 et plus, dans lequel le combustible hydrocarboné est sélectionné parmi le groupe constitué par le gaz naturel, le propane, l'essence, le carburant pour l'aviation, le biocarburant, le diesel et le kérosène ; et le préreformage, dans le préreformeur catalytique, du combustible hydrocarboné pour produire un flux de sortie de reformat qui inclut de l'hydrogène et du méthane,
    dans lequel le préreformeur catalytique inclut un catalyseur structuré qui comporte un substrat de catalyseur structuré,
    dans lequel le substrat de catalyseur structuré est un substrat de catalyseur structuré monolithique, lequel comprend un premier revêtement qui contient de l'oxyde de cérium - gadolinium, le premier revêtement étant une couche de prérevêtement et étant appliqué sur une surface du substrat de catalyseur structuré ; et un second revêtement qui contient du nickel et de l'oxyde de cérium - gadolinium, le second revêtement étant une couche de catalyseur active et étant appliqué sur le premier revêtement.

2.  Procédé selon la revendication 1, dans lequel le second revêtement du catalyseur structuré contient en outre du ruthénium.

3.  Procédé selon la revendication 1 ou 2, dans lequel le catalyseur structuré contient deux couches ou plus du second revêtement.

100

102
104
106

FIG. 1A

108

FIG. 1B

**200**

| Applying a first coating to a surface of a structured catalyst substrate using a first coating solution including a cerium gadolinium oxide powder and a first binder to form a first coated structured catalyst substrate | 202 |

| Applying a second coating to surfaces of the first coated structured catalyst substrate using a second coating solution including a nickel/cerium gadolinium oxide powder and a second binder to form a second coated structured catalyst substrate | 204 |

| Calcining the second coated structured catalyst substrate to form a calcined structured catalyst substrate | 206 |

| Activating the calcined structured catalyst substrate by heating in the presence of hydrogen to form a structured catalyst | 208 |

## FIG. 2

**300**

| Feeding to a catalytic pre-reformer air, steam, and a hydrocarbon fuel including C2 and greater hydrocarbons | 302 |

| Pre-reforming, in the catalytic pre-reformer, the hydrocarbon fuel to produce a reformate exit stream including hydrogen and methane, where the catalytic pre-reformer includes a structured catalyst having a structured catalyst substrate, a first coating applied to a surface of the structured catalyst substrate containing CGO, and a second coating applied to the first coating containing nickel CGO | 304 |

## FIG. 3

**400**

404 → | 402 | → 406 → | 408 | → 410

## FIG. 4

**FIG. 5**

FIG. 6

FIG. 7A

FIG. 7B

**FIG. 8A**

**FIG. 8B**

**FIG. 8C**

FIG. 9A

FIG. 9B

FIG. 9C

FIG. 9D

Fuel: n-dodecane, $H_2O/C$: 3.0, Temp.: 500$^{\circ}$C

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120024757 A1